**Europäisches Patentamt**

**European Patent Office**

**Office européen des brevets**

(19)

(11) **EP 1 197 478 A1**

(12) **EUROPÄISCHE PATENTANMELDUNG**

(43) Veröffentlichungstag:
**17.04.2002 Patentblatt 2002/16**

(51) Int Cl.7: **C03C 17/00**, H01J 61/35

(21) Anmeldenummer: **01124438.1**

(22) Anmeldetag: **11.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **14.10.2000 DE 10051124**

(71) Anmelder:
• **Philips Corporate Intellectual Property GmbH
52064 Aachen (DE)**
Benannte Vertragsstaaten:
**DE**
• **Koninklijke Philips Electronics N.V.
5621 BA Eindhoven (NL)**
Benannte Vertragsstaaten:
**FR GB**

(72) Erfinder:
• **Hildebrand, Volker, Dr.
52064 Aachen (DE)**
• **Gläser, Harald, Dr.
52064 Aachen (DE)**
• **Ronda, Cornelis Reinder, Dr.
52064 Aachen (DE)**
• **Mutter, Claudia
52064 Aachen (DE)**

(74) Vertreter: **Volmer, Georg, Dipl.-Ing.
Philips Corporate Intellectual Property GmbH,
Habsburgerallee 11
52064 Aachen (DE)**

(54) **UV-reflektierende Schicht, Lampe mit einer solchen Schicht und Verfahren zum Aufbringen einer solchen Schicht auf ein Lampenglas**

(57)     Bei einer UV-reflektierenden Schicht für Entladungslampen enthält die Schicht wenigstens 0,1 Gew. % $Al_2O_3$ und wenigstens 0,1 Gew.% eines Materials mit einem höheren Brechungsindex als $Al_2O_3$, damit möglichst hohe Anteile an UV-Licht reflektiert und möglichst hohe Anteile an sichtbarem Licht von der Lampe emittiert werden können.

| wt-% Alon C | $S/S_0$ wt-% | a |
|---|---|---|
| 0 | 1.00 | 1.040 |
| 10 | 1.34 | 1.030 |
| 20 | 1.38 | 1.003 |
| 30 | 1.48 | 1.003 |
| 40 | 1.18 | 1.000 |
| 50 | 1.39 | 1.000 |
| 60 | 1.17 | 1.000 |
| 70 | 0.92 | 1.000 |

EP 1 197 478 A1

**Beschreibung**

Die Erfindung betrifft eine UV-reflektierende Schicht, eine Lampe mit einer solchen Schicht und ein Verfahren zum Aufbringen einer UV-reflektierenden Schicht auf eine Lampe.

Bei Entladungslampen, wie z. B. Niederdruck-Quecksilberdampfentladungslampen, besteht das Problem, dass die bei der Entladung erzeugte Strahlung in einem für das menschliche Auge nicht sichtbaren Wellenlängenbereich, in der Regel im UV-Bereich, liegt. Zur Erzeugung von sichtbarem Licht muss diese Strahlung daher in Strahlung anderer Wellenlängen umgewandelt werden. Dazu wird auf die Innenseite des in der Regel gläsernen Entladungskörpers, also desjenigen Körpers, in dem die Gasentladung stattfindet, eine Schicht aus lumineszentem Material wie z. B. Phosphor aufgebracht.

Das lumineszente Material ist jedoch verhältnismäßig teuer und macht einen nicht unerheblichen Teil der Gesamtkosten einer solchen Lampe aus. Es wird daher seit langem versucht, die Schicht aus lumineszentem Material (Lumineszenzschicht) so dünn wie möglich zu halten. Damit auch bei Verwendung einer dünnen Lumineszenzschicht die bei der Gasentladung erzeugte Strahlung in möglichst großem Maße in sichtbares Licht umgewandelt werden kann, ist es bekannt, zwischen der Lumineszenzschicht und der Innenseite des Entladungskörpers eine zweite Schicht vorzusehen, die zwar für sichtbares Licht durchlässig ist, die jedoch UV-Licht reflektiert. Dies bewirkt, dass die Anteile der bei der Gasentladung erzeugten Strahlung, die beim Durchdringen der lumineszenten Schicht bereits in sichtbares Licht umgewandelt wurden, den Entladungskörper weitestgehend ungehindert verlassen können, während diejenigen Anteile, die die Lumineszenzschicht passiert haben, ohne durch Absorption und Emission in sichtbares Licht umgesetzt zu werden, von der reflektierenden Schicht zumindest zum Teil auf die Lumineszenzschicht reflektiert werden. Die Grundidee ist also, UV-Licht im Entladungskörper quasi "einzusperren" und es solange hin- und herzureflektieren, bis es von Atomen der Lumineszenzschicht absorbiert wird, welche dann Wellenlängen im sichtbaren Bereich emittieren.

In der Praxis bereitet die Realisation einer UV-reflektierenden Schicht, die UV-Strahlung möglichst vollständig reflektiert und gleichzeitig Wellenlängen im sichtbaren Bereich möglichst ungehindert passieren lässt, Schwierigkeiten. Für die reflektierende Schicht wurden unterschiedlichste Materialien und Materialmischungen vorgeschlagen, beispielsweise in der AT 353 357 C1, in welcher eine UV-reflektierende Schicht vorgeschlagen wird, die nicht ausschließlich aus Material, das UV Strahlung gut reflektiert, sondern aus einem solchen Material in einer Mischung mit einem Lumineszenzstoff besteht. In der US 3,995,192 wird eine UV-reflektierende Schicht aus $TiO_2$ vorgeschlagen, welchem bis zu 15 Gewichtsprozent, vorzugsweise jedoch nur wenige Zehntel Gewichtsprozent (0,14 bis 0,17 Gew.%) $Al_2O_3$ oder $ZrO_2$ beigemischt sind. Aus der JP 53-63788 A2 ist eine Reflexionsschicht aus zwei reflektierenden Materialien unterschiedlicher Korngröße bekannt, wobei das eine Material eine Korngröße kleiner 1 μm besitzt und etwa 95 bis 99,9 Gew.% der Reflexionsschicht ausmacht und wobei das zweite Material eine Korngröße von etwa 2 bis 8 μm besitzt und etwa 0,1 bis 5 Gew.% der Reflexionsschicht ausmacht. Eine solche Materialmischung soll vor allem die Haftung und Haltbarkeit der Reflexionsschicht gewährleisten.

Die bislang bekannten Materialien und Materialienmischungen für die Reflexionsschicht erfüllen die an die Reflexionsschicht gestellte Aufgabe jedoch noch nicht optimal. So ist zwar bekannt, dass die Verwendung reflektierender Materialien mit einem hohen Brechungsindex bei entsprechender Korngröße dazu führen kann, dass die ungewünschte Streuung des sichtbaren Lichtes reduziert werden kann, ohne die gewünschte Reflexion des UV-Lichtes damit gleichzeitig zu vermindern, jedoch haben Materialien mit einem hohen Brechungsindex auch die Fähigkeit, UV-Licht zu absorbieren, ohne nach der Absorption Licht im sichtbaren Bereich zu emittieren. Die Energie der absorbierten Strahlung geht also ungenutzt verloren.

Davon ausgehend liegt der Erfindung die Aufgabe zugrunde, eine UV-reflektierende Schicht, eine mit einer solchen Schicht versehene Lampe und ein Verfahren zum Aufbringen einer solchen Schicht auf eine Lampe anzugeben, wobei die Schicht sehr gute UV-Reflexions- und gleichzeitig sehr gute Transmissionseigenschaften für sichtbares Licht besitzen soll, insbesondere sichtbares Licht möglichst wenig streut, so dass der Streukontrast verbessert wird.

Die Aufgabe wird gelöst von einer Schicht, einer Lampe und einem Verfahren mit den Merkmalen der unabhängigen Ansprüche. Vorteilhafte Aus- und Durchführungsformen sind Gegenstand der Unteransprüche.

Die Erfindung basiert auf der Erkenntnis, dass es möglich ist, durch Mischung von Materialien mit einem hohen und einem niedrigen Brechungsindex die effektive Weglänge des sichtbaren Lichts durch die Schicht zu verringern, so dass weniger sichtbares Licht absorbiert wird, ohne den Anteil an reflektiertem UV-Licht zu verringern.

Wenn UV-absorbierende Teilchen mit der optimalen Streukraft in einem Matrix von schwach-streuenden Nanoteilchen aus nicht-UV-absorbierendem Material eingebettet werden, bleibt der Streukoeffizient der gesamten Schicht gleich oder wächst sogar an, während die Absorption verringert wird.

Dabei gilt die Beziehung

$$a = 1 + K/S$$

wobei S der Streukoeffizient und K der Absorptionskoeffizient der Gesamtschicht für Licht einer bestimmten Wellenlänge ist. Es gilt:

$$K = k\sigma$$

wobei k eine konstante und σ der Volumenanteil der größeren Teilchen in der Schicht ist.

Wenn Mischungen von Teilchen mit Größen, die der optimalen Streukraft entsprechen, mit nicht-absorbierenden Teilchen verdünnt werden, die signifikant kleiner als 254 Nm sind, dann hängt der Streufaktor S einer solchen Schicht von dem Volumenanteil σ der größeren Teilchen ab. Dieser Effekt wird beschrieben durch

$$S = s\sigma(1 - \gamma s\sigma^{2/3})$$

wobei s definiert ist als

$$s = \frac{d\,s}{d\sigma}\bigg|_{\sigma \to 0}$$

γ hängt mit der Art zusammen, in der die Teilchen gepackt sind. Von Pigmenten in Polymeren ist bekannt, dass der für Streuung optimale Volumenanteil bei ca. 30 Vol.-% liegt.

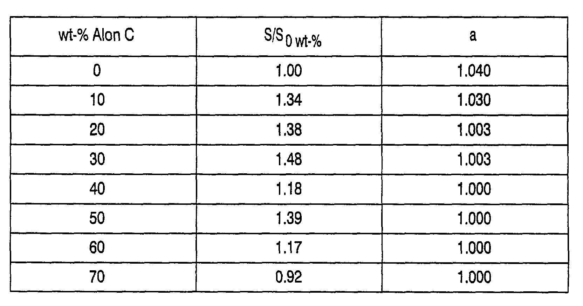

Der Streukoeffizient S und der Parameter a können aus Reflexionsdaten von Schichten mit unterschiedlicher Schichtdicke berechnet werden. Die Streukoeffizienten und die entsprechenden Werte von Schichten aus Aluminiumteilchen mit einer spezifischen Oberfläche von 100 m$^2$/g und dotiertem $ZrO_2$ sind in der Tabelle gemäß Figur 1 zusammengefasst. Die Werte sind auf einen Fluorpolymerstandard bezogen. Die Streukoeffizienten sind auf den Streukoeffizienten von ungemischten $ZrO_2$ normiert.

Der Wert des Parameters a sinkt mit zunehmendem Gehalt an nanokristallinem $Al_2O_3$ und strebt gegen eins bei 0,4 Gew.% Nanoteilchen. Dieses Rezept ermöglicht die Verwendung von Materialien mit höherem Brechungsindex als $Al_2O_3$ und damit höherem Streukontrast für UV-reflektierende Schichten. Außer dotiertem $ZrO_2$ können auch Teilchen aus $ZrO_2$, Yttriumoxid, Hafniumoxid und den Oxiden seltener Erden verwendet werden. Das Prinzip ist auch für andere Wellenlängen anwendbar, wenn die Teilchengröße und die Absorptionskante entsprechend gewählt werden.

Die Reflexionsschicht kann z. B. auf nasschemischen Wege aufgebracht werden. Zu diesem Zweck kann man eine Mischung von Nanoteilchen und stark lichtstreuenden Teilchen mit Hilfe von Salpetersäure oder anderen Dispersionshilfsmitteln in Wasser stabilisieren.

Nach Zufügen eines geeigneten Bindersystems kann eine Schicht des Reflektormaterials und in einem folgenden Schritt des Lumineszenzmaterials aufgebracht werden. Durch entsprechende Wahl der Mischungsverhältnisse lässt sich die erreichbare Reflektivität relativ zu einem Fluorpolymerstandard für das genannte Beispiel zwischen 70 und ca. 100 % einstellen.

Wird die Teilchengröße des $AL_2O_3$ signifikant unter 254 nm, vorzugsweise unter 10 nm, gehalten, so kann auf einfache Weise eine Einbettung in eine nanokristalline Struktur realisiert werden. Es versteht sich, dass nicht sämtliches $Al_2O_3$ nanokristallin ausgebildet sein muss. Hierbei kann es - je nach konkreter Ausgestaltung - ausreichen, dass die mittlere Teilchengröße des $Al_2O_3$ unter 100 nm, vorzugsweise unter 30 nm, gewählt ist. Da in der Regel derartige Partikel dazu neigen, zu Agglomeraten zu agglomerieren, ist es von Vorteil, wenn diese Agglomerate im Mittel unter 200 nm, vorzugsweise unter 140 nm, groß sind.

**Patentansprüche**

1. UV-reflektierende Schicht, insbesondere für Entladungslampen,
   **dadurch gekennzeichnet,**
   **dass** die Schicht wenigstens 10 Gew.-% $Al_2O_3$, vorzugsweise zwischen 10 und 70 Gew.-% $Al_2O_3$ und wenigstens 10 Gew.% eines Materials mit einem höheren Brechungsindex als $Al_2O_3$ enthält.

2. Schicht nach Anspruch 1,
   **dadurch gekennzeichnet,**
   **dass** das Material mit dem höheren Brechungsindex als $Al_2O_3$ ein Material aus der folgenden Gruppe von Materialien ist: Zirkondioxid, dotiertes Zirkondioxid, Yttriumoxid, Hafniumoxid und die Oxide der seltenen Erden.

3. Lampe, insbesondere Gasentladungslampe mit einem Entladungskörper, auf dessen Innenseite eine Schicht aus UV-lichtreflektierendem Material aufgebracht ist,
   **dadurch gekennzeichnet,**
   **dass** die Schicht wenigstens 10 Gew.-% $Al_2O_3$, vorzugsweise zwischen 10 und 70 Gew.-% $Al_2O_3$ und wenigstens 10 Gew.% eines Materials mit einem höheren Brechungsindex als $Al_2O_3$ enthält.

4. Lampe nach Anspruch 3,
   **dadurch gekennzeichnet,**
   **dass** das Material mit dem höheren Brechungsindex als $Al_2O_3$ ein Material aus der folgenden Gruppe von Materialien ist: Zirkondioxid, dotiertes Zirkondioxid, Yttriumoxid, Hafniumoxid und die Oxide der seltenen Erden.

5. Verfahren zum Aufbringen einer Schicht aus UV-lichtreflektierendem Material auf ein Lampenglas, insbesondere auf den Entladungskörper einer Entladungslampe,

**dadurch gekennzeichnet,**

**dass** eine Mischung aus nanokristallinem $Al_2O_3$ und Teilchen eines stärker als $Al_2O_3$ streuenden Materials, wie insbesondere dotiertes Zirkondioxid, nicht-dotiertes Zirkondioxid, Yttriumoxid, Hafniumoxid und den Oxiden der seltenen Erden, mit Hilfe eines Dispersionshilfsmittels, insbesondere Salpetersäure, in Wasser stabilisiert wird, dass ein geeignetes Bindersystem zugeführt wird und dass die sich ergebende Mischung auf die zu beschichtende Seite des Ladungskörpers aufgebracht wird.

6. Schicht, Lampe oder Verfahren nach einem Ansprüche 1 bis 5,

   **dadurch gekennzeichnet,**

   **dass** das $Al_2O_3$ einer Teilchengröße unter 254 nm für mehr als 90 Gew.% des $Al_2O_3$ gewählt ist.

7. Schicht, Lampe oder Verfahren nach Anspruch 6,

   **dadurch gekennzeichnet,**

   **dass** die $Al_2O_3$-Teilchen einen mittleren Durchmesser kleiner als 100 nm, vorzugsweise kleiner 30 nm, aufweisen, wobei diese Primärteilchen - gegebenenfalls - zu Aggregaten unter 200 nm, vorzugsweise unter 140 nm, agglomeriert sind.

| wt-% Alon C | $S/S_{0\ wt\text{-}\%}$ | a |
|---|---|---|
| 0 | 1.00 | 1.040 |
| 10 | 1.34 | 1.030 |
| 20 | 1.38 | 1.003 |
| 30 | 1.48 | 1.003 |
| 40 | 1.18 | 1.000 |
| 50 | 1.39 | 1.000 |
| 60 | 1.17 | 1.000 |
| 70 | 0.92 | 1.000 |

**Europäisches Patentamt**

# EUROPÄISCHER RECHERCHENBERICHT

Nummer der Anmeldung

EP 01 12 4438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | US 3 995 192 A (HAMMER EDWARD E) 30. November 1976 (1976-11-30) * Zusammenfassung * * Spalte 1, Zeile 48 - Spalte 2, Zeile 7 * * Tabelle 1 * | 1,3,5 | C03C17/00 H01J61/35 |
| A | EP 0 639 852 A (PHILIPS ELECTRONICS NV) 22. Februar 1995 (1995-02-22) * Seite 3, Zeile 31 - Zeile 51 * * Seite 5, Zeile 13 * | 1-7 | |
| A | EP 0 762 479 A (GEN ELECTRIC) 12. März 1997 (1997-03-12) * Beispiele * | 1-7 | |
| A | EP 0 385 275 A (NICHIA KAGAKU KOGYO KK) 5. September 1990 (1990-09-05) * Tabelle * | 1-7 | |
| A | US 4 948 530 A (BARTHELMES CLEMENS ET AL) 14. August 1990 (1990-08-14) * Spalte 2, Zeile 13 - Zeile 21 * * Spalte 2, Zeile 48 - Zeile 58 * | 1-7 | RECHERCHIERTE SACHGEBIETE (Int.Cl.7) H01J C03C |

Der vorliegende Recherchenbericht wurde für alle Patentansprüche erstellt

| Recherchenort | Abschlußdatum der Recherche | Prüfer |
|---|---|---|
| MÜNCHEN | 14. Februar 2002 | Somann, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................
& : Mitglied der gleichen Patentfamilie,übereinstimmendes Dokument

EPO FORM 1503 03.82 (P04C03)

# EP 1 197 478 A1

## ANHANG ZUM EUROPÄISCHEN RECHERCHENBERICHT
## ÜBER DIE EUROPÄISCHE PATENTANMELDUNG NR.

EP 01 12 4438

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 3995192 | A | 30-11-1976 | KEINE | | |
| EP 0639852 | A | 22-02-1995 | BE | 1007440 A3 | 13-06-1995 |
| | | | DE | 69403292 D1 | 26-06-1997 |
| | | | DE | 69403292 T2 | 11-12-1997 |
| | | | EP | 0639852 A1 | 22-02-1995 |
| | | | JP | 7078598 A | 20-03-1995 |
| | | | US | 5514932 A | 07-05-1996 |
| EP 0762479 | A | 12-03-1997 | US | 5602444 A | 11-02-1997 |
| | | | CA | 2183387 A1 | 01-03-1997 |
| | | | EP | 0762479 A2 | 12-03-1997 |
| | | | JP | 9167595 A | 24-06-1997 |
| EP 0385275 | A | 05-09-1990 | JP | 1910958 C | 09-03-1995 |
| | | | JP | 2223147 A | 05-09-1990 |
| | | | JP | 6036349 B | 11-05-1994 |
| | | | DE | 69014349 D1 | 12-01-1995 |
| | | | DE | 69014349 T2 | 14-06-1995 |
| | | | EP | 0385275 A2 | 05-09-1990 |
| | | | FI | 108091 B1 | 15-11-2001 |
| | | | US | 5008789 A | 16-04-1991 |
| US 4948530 | A | 14-08-1990 | DE | 3832643 A1 | 29-03-1990 |
| | | | DE | 58908829 D1 | 09-02-1995 |
| | | | EP | 0361198 A2 | 04-04-1990 |
| | | | JP | 2121229 A | 09-05-1990 |
| | | | JP | 2663988 B2 | 15-10-1997 |

EPO FORM P0461

Für nähere Einzelheiten zu diesem Anhang : siehe Amtsblatt des Europäischen Patentamts, Nr.12/82